# EUROPÄISCHE PATENTANMELDUNG

(11) **EP 1 728 573 A1**
(43) Veröffentlichungstag der Anmeldung: **06.12.2006**
(21) Anmeldenummer: 05014846.9
(22) Anmeldetag: 08.07.2005
(51) Int. Cl.: B23B 31/117, B23P 11/02

(54) **Werkzeugmaschine mit Werkzeug- bzw. Werkstück-Spanneinrichtung**

(30) Priorität: 02.06.2005 DE 102005025459
(71) Anmelder: P & L GmbH & Co. KG, 20148 Hamburg (DE)
(72) Erfinder: Röders, Jürgen, 20148 Hamburg (DE)
(74) Vertreter: Weber, Joachim

(57) **Zusammenfassung**

Die vorliegende Erfindung betrifft eine Werkzeugmaschine mit einer drehbaren Spindelwelle 1 zur Lagerung eines Werkzeugs oder Werkstücks, dadurch gekennzeichnet, dass das freie Ende der Spindelwelle 1 lösbar mit einem Kupplungselement 2 verbunden ist und dass das Kupplungselement 2 mittels eines Passsitzes mit einem Aufnahmeelement 3 lösbar verbunden ist und dass eine Einrichtung zum thermischen Lösen des Passsitzes vorgesehen ist.

## Beschreibung

Die Erfindung bezieht sich auf eine Werkzeugmaschine mit einer drehbaren Spindelwelle zur Lagerung eines Werkzeugs oder Werkstücks. Die Erfindung bezieht sich somit ganz allgemein auf Werkzeugmaschinen oder Bearbeitungszentren, bei welchen entweder ein Werkstück oder ein Werkzeug an einer drehbaren Welle lösbar gelagert wird.

Die Bearbeitungsgeschwindigkeiten an Werkzeugmaschinen werden immer weiter gesteigert. Entsprechend hoch muß die erforderliche Drehzahl in der Hauptspindel der Maschine, die das Werkzeug oder Werkstück antreibt, sein. Daher werden für diese Hauptspindeln in der Regel Motorspindeln eingesetzt. Bei Motorspindeln sitzt ein Motor zwischen zwei Lagerstellen, die die Spindelwelle in axialer und radialer Richtung lagern. Die Lager können mit Kugellagern, hydrostatisch oder anders ausgeführt sein. Außerdem ist im Zentrum der rotierenden Spindelwelle ein Spannsystem vorgesehen, um am Ende der Spindelwelle ein Werkzeugaufnahmeelement oder Werkstückaufnahmeelement für die Bearbeitung zu spannen.

Bei hohen Drehzahlen kommt es sehr auf die Wuchtgüte der Hauptspindel an, da andernfalls unerwünschte Schwingungen während der Bearbeitung entstehen. Diese Schwingungen verschlechtern die Bearbeitungsgenauigkeit und die erreichbare Oberflächenqualität am Werkstück und sind daher unerwünscht.

Je besser die Wuchtgüte der Hauptspindel ist, desto geringer sind die entstehenden Schwingungen und desto besser ist das erreichbare Bearbeitungsergebnis. Ein begrenzender Faktor bei der Optimierung der Wuchtgüte der Hauptspindel ist der in der Spindelwelle befindliche Spannsatz. Dieser wird in der Regel mit einer Zugstange, einem Federpaket und den Spannelementen für die Steilkegelaufnahmeelemente oder die Aufnahmeelemente mit HSK-Schnittstelle ausgeführt. Sämtliche Elemente des Spannsatzes müssen für die Funktion der Spannung der Aufnahmeelemente beweglich in der Spindelwelle angeordnet werden. Sie haben somit ein minimales Spiel zu der Spindelwelle und können sich innerhalb dieses Spiels bewegen. Das führt zu Veränderungen des Wuchtzustandes der Spindelwelle und begrenzt die erreichbare Wuchtgüte der Spindelwelle.

Der Erfindung liegt die Aufgabe zugrunde, eine Werkzeugmaschine der eingangs genannten Art zu schaffen, bei welcher unter Vermeidung der Nachteile des Standes der Technik eine präzise Spannung eines Werkzeugs oder eines Werkstücks möglich ist.

Erfindungsgemäß wird die Aufgabe durch die Merkmalskombination des Hauptanspruchs gelöst, die Unteransprüche zeigen weitere vorteilhafte Ausgestaltungen der Erfindung.

Erfindungsgemäß ist somit vorgesehen, dass in das freie Ende der Spindelwelle mittels eines Passsitzes ein Kupplungselement (Dorn) eingesetzt wird. Der Passsitz kann dabei so gewählt werden, dass eine hochpräzise Aufnahme des Kupplungselements (Dorns) gewährleistet ist, so dass sich keine Wucht-Fehler ergeben. Wie nachfolgend noch erläutert werden wird, ist es erfindungsgemäß auch möglich, die drei Bauelemente (Spindelwelle, Kupplungselement und Aufnahmeelement) einstückig auszubilden oder zumindest zwei dieser Bauelemente einstückig auszugestalten. Die Erfindung ist somit nicht darauf beschränkt, dass es sich um einzelne, jeweils voneinander separierbare Bauelemente handelt. Dies ergibt sich aus der nachfolgenden Beschreibung im Detail.

Auf die aus dem Stand der Technik bekannten Spannvorrichtungen, die im Innenraum der Spindelwelle angeordnet sind, kann erfindungsgemäß somit völlig verzichtet werden. Zum einen erniedrigt sich die Zahl der Bauelemente, zum anderen werden die durch derartige zusätzliche Bauelemente verursachten Wucht-Fehler eliminiert.

Als Alternative ist es erfindungsgemäß auch möglich, das Kupplungselement auf andere Weise mit der Spindelwelle zu koppeln, beispielsweise mittels eines Gewindes.

Zur Aufnahme des Werkzeugs oder Werkstücks ist erfindungsgemäß vorgesehen, dass das Kupplungselement mittels eines Passsitzes mit einem Aufnahmeelement lösbar verbunden ist.

Erfindungsgemäß ist somit vorgesehen, dass bei der erfindungsgemäßen Ausgestaltung eine Einrichtung verwendet wird, welche zum thermischen Lösen zumindest eines der Passsitze geeignet ist. Unter thermischem Lösen wird im Rahmen der Erfindung verstanden, dass durch gezielte Wärmeänderung bestimmter Bereiche der Passsitz gelöst wird. Diese gezielte Wärmeänderung kann sich durch eine lokale Erwärmung ergeben. Erfindungsgemäß können weiterhin Mittel vorgesehen sein, um zu einem lokalen Abkühlen beizutragen, um nach einer erfolgten Lösung den Passsitz wieder fest zu fügen.

Die Einrichtung zum thermischen Lösen des Passsitzes kann somit eine gezielte Erwärmung bestimmter Bereiche bewirken. Hierdurch erfolgt eine Wärmeausdehnung dieser Bereiche, welche zu einem Lösen des Passsitzes führt.

Es versteht sich, dass die Erfindung nicht darauf beschränkt ist, dass die einzelnen Materialien unterschiedliche Ausdehnungskoeffizienten aufweisen, obwohl dies, wie nachfolgend noch beschrieben werden wird, zu einer günstigen Weiterbildung der Erfindung führt.

Erfindungsgemäß ist es somit wichtig, dass der Passsitz durch lokale Erwärmung gelöst wird. Dabei ist nicht unbedingt erforderlich, dass die Temperatur zum Einschrumpfen des Kupplungselements (Dorns) in die Spindelwelle höher ist, als die Temperatur zum Aufschrumpfen des Aufnahmeelements auf das Kupplungselement. Die Gesamttemperaturen dieser Bauelemente brauchen somit nicht erhöht werden. Es reicht vielmehr, wenn eine lokale Erwärmung erfolgt, um den Passsitz zu lösen. Gleiches gilt für die Einschrumpftemperatur zum Einsetzen und zum Fixieren des Passsitzes.

Durch geeignete Wahl der Wärmeausdehnungskoeffizienten ist es somit möglich, das Aufnahmeelement von dem Kupplungselement zu lösen, ohne dass das Kupplungselement sich von der Spindelwelle löst. In gleicher Weise ist es erfindungsgemäß möglich, mittels eines weiteren Passsitzes bzw. einer weiteren Schrumpfverbindung ein Werkzeug oder Werkstück in das Aufnahmeelement einzusetzen oder an diesem zu lagern. Auch hierbei ist durch Abstufung der jeweiligen Wärmeausdehnungskoeffizienten ein selektives Lösen der jeweiligen Passsitze möglich. In gleicher Weise wird verhindert, dass sich einzelne dieser Verbindungen in unerwünschter Weise lösen. Somit wird beispielsweise verhindert, dass sich das Werkzeug oder Werkstück von dem Aufnahmeelement löst, wenn dieses mit dem Kupplungselement verbunden bzw. von diesem gelöst wird.

### Im Einzelnen sieht die Erfindung Folgendes vor:

Die Spindelwelle wird erfindungsgemäß massiv ausgeführt, d.h. ohne die für den Spannsatz erforderlichen Bohrungen. Es wird an dem Spindelende, an dem das neuartige Aufnahmeelement gespannt werden soll, lediglich ein präzises Sackloch vorgesehen. In dieses Sackloch wird ein Kupplungselement (Dorn) mit einer relativ geringen Wärmedehnung, z.B. aus Hartmetall, eingeschrumpft. Die Passung wird so gewählt, dass die erforderliche Schrumpftemperatur, d.h. die Temperatur, auf die die Spindelwelle gebracht werden muß, um das Kupplungselement (Dorn) in das Sackloch einführen zu können, relativ hoch ist. Das Kupplungselement (Dorn) ist an beiden Enden eng toleriert und steht aus der Welle heraus.

Das erfindungsgemäße Aufnahmeelement hat ebenfalls eine Passung, die es wiederum erlaubt, dieses Aufnahmeelement auf das Kupplungselement (Dorn) aufzuschrumpfen. Dabei ist die Passung zwischen Kupplungselement (Dorn) und Aufnahmeelement so gewählt, dass die erforderliche Schrumpftemperatur erheblich niedriger ist, als die Temperatur zum Einschrumpfen des Kupplungselements (Dorns) in die Spindelwelle. Dadurch wird sichergestellt, dass das (die) Aufnahmeelement(e) mehrfach auf das Kupplungselement (Dorn) auf- und wieder heruntergeschrumpft werden können, ohne dass sich das Kupplungselement (Dorn) in der Spindelwelle löst. Aufnahmeelement und Kupplungselement (Dorn) sind so ausgelegt, dass die Wärmedehnung des Kupplungselements (Dorns) erheblich geringer ist, als die Wärmedehnung des Aufnahmeelements. Dadurch ist ein Auf- und Herunterschrumpfen bei relativ niedriger Temperatur möglich. Natürlich kann das Kupplungselement (Dorn) in der Spindelwelle auch auf andere Art befestigt werden als durch Schrumpfen, z.B. durch ein Gewinde. Die Schrumpfverbindung hat jedoch eine sehr hohe Genauigkeit und wird daher bevorzugt.

Das erfindungsgemäße Aufnahmeelement kann auf seiner anderen Seite so ausgeführt werden, wie dies aus dem Stand der Technik bekannt ist. D.h. es kann ein weiterer Schrumpfsitz zum Spannen des Bearbeitungswerkzeuges oder des Werkstücks am anderen Ende des Aufnahmeelements vorgesehen werden. Dabei ist dann wieder darauf zu achten, dass die erforderliche Schrumpftemperatur erheblich höher ist als die für das Aufschrumpfen der Aufnahmeelemente auf das Kupplungselement (Dorn) der Spindelwelle, damit sich das Bearbeitungswerkzeug oder das Werkstück beim Aufschrumpfen des Aufnahmeelements auf das Kupplungselement (Dorn) der Spindelwelle nicht lösen. Alternativ können die Aufnahmeelemente auf der Seite zum Spannen des Bearbeitungswerkzeuges oder Werkstückes auch wie konventionelle Spannzangenaufnahmen, Hydrodehnspannfutter oder andere bekannte Aufnahmeelemente ausgeführt sein.

Für ein sicheres und einfaches Spannen des Aufnahmeelements auf dem Kupplungselement (Dorn) der Spindelwelle ist es vorteilhaft, wenn das Aufnahmeelement und/oder das Kupplungselement (Dorn) mit einer Einführungsfase versehen sind. Dann muss die Positionierung des Aufnahmeelements vor dem Kupplungselement (Dorn) für den Schrumpfvorgang nicht so exakt sein.

Für einen automatischen Werkzeugwechsel in der Maschine ist es wichtig, dass der Werkzeugwechsel, d.h. der Wechsel von einem Aufnahmeelement zum nächsten an der Spindelwelle, für die Bearbeitung nicht lange dauert. Dazu muß die Zeit für das Erwärmen und Abkühlen des Aufnahmeelements so gering wie möglich gehalten werden. Erfindungsgemäß ist vorgesehen, die Erwärmung induktiv auszuführen. Die dafür erforderlichen Spulen können ringförmig um das Aufnahmeelement an der Position des Werkzeugwechsels angeordnet werden. Über Induktion wird gezielt und lokal die Passung des Aufnahmeelements, das auf dem Kupplungselement (Dorn) sitzt, erwärmt. So wird schnell gespannt und gelöst.

Bei der erfindungsgemäß bevorzugt vorgesehenen induktiven Erwärmung ist es somit möglich, eines der Bauelemente, welche einen der beiden Passsitze bilden, gezielt und bevorzugt partiell zu erwärmen (Spindelwelle, Kupplungselement und/oder Aufnahmeelement). Die Induktionserwärmung erfolgt dabei an der Oberfläche des Bauelements. Durch eine entsprechende Dimensionierung kann dieser Effekt unterstützt werden, beispielsweise durch einen geringeren Durchmesser des Aufnahmeelements. Somit erfolgt beispielsweise eine schnellere äußere Erwärmung des Aufnahmeelements als des Kupplungselements. Dadurch weitet sich dieses auf und löst den Passsitz. Es ist somit nicht unbedingt erforderlich, dass beispielsweise das Kupplungselement und das Aufnahmeelement unterschiedliche Wärmeausdehnungskoeffizienten aufweisen, obgleich dies den Effekt in positiver Weise verstärken kann. Somit ist es erfindungsgemäß auch möglich, gleiche Materialien bei den jeweiligen Bauelementen (Spindelwelle, Kupplungselement und/oder Aufnahmeelement) zu verwenden.

Bei der induktiven Erwärmung, bei welcher die erfindungsgemäße Einrichtung zum thermischen Lösen des Passsitzes zumindest eine Induktionsspule umfasst, ist es in vorteilhafter Weiterbildung der Erfindung günstig, die Induktionsstrahlung durch Ferritkerne oder Ferritplatten abzuschirmen. Hierdurch kann eine gezielte, lokale Erwärmung bei geringerem Energieaufwand in kürzerer Zeit realisiert werden.

Für die Kühlung kann erfindungsgemäß mit zwei oder mehr gekühlten Backen gearbeitet werden. Diese können nach dem Aufwärmen des Aufnahmeelements durch Induktion gegen das Aufnahmeelement bewegt werden und diese über Wärmeleitung abkühlen.

Alternativ kann eine Kühlflüssigkeit auch direkt gegen das Aufnahmeelement geleitet bzw. gespritzt werden, um dieses effizient abzukühlen, am besten von mehreren Seiten. Nachteilig kann bei diesem Verfahren sein, dass die Flüssigkeit in der Maschine eingefangen werden und zurückgeleitet werden muß. Außerdem muß der Induktionsring wasserfest, z.B. IP65, gefertigt werden, um die Elektronik vor der Kühlflüssigkeit zu schützen. Vorteilhaft ist, dass die Kühlung erheblich effizienter als bei dem Verfahren mit Wärmeleitung ist. Damit wird die Endtemperatur schneller erreicht, was auch für die Genauigkeit relevant ist. Ein Verbleiben von Restwärme in dem Aufnahmeelement ist unerwünscht, da dadurch die Genauigkeit der nachfolgenden Bearbeitung beeinflusst werden würde, wenn das Aufnahmeelement sich während dieser Bearbeitung langsam weiter abkühlen würde und sich damit maßlich verändern würde.

Das Kupplungselement (Dorn) in der Spindelwelle sollte vom Durchmesser möglichst groß gewählt werden. Dadurch wird die Stabilität und die Steifigkeit der Spannung des Aufnahmeelements auf dem Kupplungselement (Dorn) verbessert. Außerdem ist die benötigte Schrumpftemperatur für das Wechseln des Aufnahmeelemente nicht so hoch. Denn je größer der Durchmesser des Kupplungselements (Dorns) ist, desto geringer ist die erforderliche Temperaturerhöhung um eine vorgegebene maßliche Veränderung von Kupplungselement (Dorn) und Aufnahmeelement zu erreichen.

Ein weiterer wesentlicher Vorteil in der erfindungsgemäßen Art die Aufnahmeelemente zu spannen liegt darin, dass auch der Platzbedarf für den bisher verwendeten Spannsatz entfällt. Die Spindelwelle kann massiv ausgeführt werden. Es kann aber auch eine Kühlung eingebracht werden. Dies ist bei Verwendung eines Spannsatzes oft nicht möglich, da die Wandung der Spindelwelle zwischen Spannsatzbohrung und Aussendruchmesser der Spindelwelle zu klein ist. Bei einer massiven Spindelwelle kann jedoch ein Kühlsystem eingebracht werden. Es steht ausreichend Raum zur Verfügung, auch bei hochdrehenden relativ schlanken Spindelwellen.

Ein Problem beim Stand der Technik ist das Einleiten der Kühlflüssigkeit in die Spindelwelle und das Abführen aus dieser. Auf Grund der hohen Drehzahlen gibt es keine geeigneten Übertragungselemente die einen Ein- und Auslauf ermöglichen. Es sind lediglich Drehdurchführungen für einen Kanal bekannt. Dazu wird nachfolgend eine Lösung vorgeschlagen, die mit einer Drehdurchführung auskommt, die nur einen Kanal enthält.

Im Zentrum der Spindelwelle wird erfindungsgemäß eine durchgehende Bohrung vorgesehen. Auf der dem Kupplungselement (Dorn) gegenüberliegenden Seite wird eine bekannte Drehdurchführung angebracht, die eine Kühlflüssigkeit in die Welle einleitet. Am Ende der Spindelwelle, an dem das Kupplungselement (Dorn) sitzt, ist eine kleine Kammer vorgesehen, in die Kühlflüssigkeit über die zentrale Bohrung geleitet wird. Aus dieser Kammer leiten mehrere kleine Bohrungen (Rückführkanäle) parallel zu der zentralen Bohrung die Kühlflüssigkeit ein Stück in der Welle zurück. Die kleinen Bohrungen sind radial symmetrisch um die zentrale Bohrung angeordnet, um keine Unwucht in die Spindelwelle zu bekommen. Am Ende der kleinen zur Spindelwelle parallelen Bohrungen sind radiale Bohrungen eingebracht, die die Kühlflüssigkeit aus der Spindelwelle nach außen leiten. Die Kühlflüssigkeit tritt an diesen Bohrungen aus der Spindelwelle aus und wird in einer Kammer (Ringkammer) im Gehäuse der Spindel aufgefangen und von dort abgesaugt. Bei hoher Drehzahl wird das Durchströmen der Spindelwelle mit Kühlflüssigkeit durch die Zentrifugalkräfte noch unterstützt.

Durch das Rückleiten der Kühlflüssigkeit in der Spindelwelle über ein kurzes Stück kann der Lagersitz für die Spindelwelle zwischen Kupplungselement (Dorn) und Kammer zum Auffangen der Kühlflüssigkeit angeordnet werden. Der Lagersitz befindet sich somit möglichst nahe an dem Aufnahmeelement, was die Steifigkeit der Lagerung erhöht. Außerdem ist meistens das Lager auf der Seite der Anbringung des Aufnahmeelements an der Hauptspindel dasjenige, was stärker ausgelegt wird und mehr Wärme entwickelt. Durch die Rückführung der Kühlflüssigkeit durch die kleinen Bohrungen ist der Kühleffekt an dieser Stelle besonders gut und wirkt einer Erwärmung entgegen. Die Rückführung der Kühlflüssigkeit kann auch länger sein, je nach Spindelausführung. Z.B. kann sich die Rückführung auch über den Bereich des Motorsitzes in der Spindelwelle erstrecken. Dazu müssen die kleinen Bohrungen für die Rückführung entsprechend tiefer in die Spindelwelle eingebracht werden.

Außerdem ist es unerwünscht, dass Wärme von der Spindelwelle in die Aufnahmeelemente gelangt. Wenn diese sich erwärmen, dehnen sich diese aus. Das führt zu unerwünschten Abweichungen bei der Bearbeitung. Daher ist eine besonders gute Kühlung auf der Seite der Anbringung der Aufnahmeelemente an der Spindelwelle besonders wichtig.

Alternativ ist es auch möglich, in jedem Aufnahmeelement ein Kupplungselement (Dorn) vorzusehen. Das Aufnahmeelement wird dann mit ihrem Kupplungselement (Dorn) in ein Sackloch in der Spindelwelle zum Werkzeugwechsel ein- und ausgeschrumpft. Dazu müssen die Passungen (Schrumpftemperaturen) entsprechend ausgelegt werden, da sich das Kupplungselement (Dorn) beim Wechsel des Aufnahmeelements nicht in dem Aufnahmeelement lösen darf, sondern nur in der Spindelwelle. In diesem Fall ist au-βerdem eine andere Ausführung der optionalen Spindelwellenkühlung erforderlich.

Vorteilhaft für die Genauigkeit des Wechsels des Aufnahmeelements ist es, wenn ein Anschlag in axialer Richtung (Axialanschlag) vorgesehen wird. Dieser kann sich an dem Ende des Aufnahmeelements befinden, so dass dieses mit ihrem Ende beim Aufschrumpfen gegen eine entsprechende Fläche an der Spindelwelle stößt. Alternativ kann vorgesehen sein, dass das Ende des Kupplungselements (Dorns) in der Spindelwelle beim Einschrumpfen gegen eine Anschlagsfläche in dem Aufnahmeelement stößt.

Für eine bessere Kühlung des Kupplungselements (Dorns) kann dieser ein Sackloch (Ausnehmung) enthalten. Dann strömt die Kühlflüssigkeit der Spindelwellenkühlung auch in das Sackloch und hält das Kupplungselement (Dorn) von innen kühl. Das ist besonders für das Ausschrumpfen der Aufnahmeelemente vom Kupplungselement (Dorn) vorteilhaft. Auch der Abkühlvorgang nach dem Schrumpfen erfolgt dadurch schneller. Es kann sogar ganz auf eine Abkühlung von außen verzichtet werden.

Alternativ hierzu ist es erfindungsgemäß auch möglich, die Heizung und/oder die Kühlung des Aufnahmeelements beim Werkzeugwechsel durch Wärmeleitung zu realisieren. Hierzu ist es möglich, Anlagebacken oder ähnliches zu verwenden, welche gegen das Aufnahmeelement angelegt werden können, um dieses entweder zu erwärmen oder abzukühlen.

Zur weiteren Verbesserung kann ein rohrförmiges Spindelwellenende vorgesehen werden, das in das Sackloch in dem Kupplungselement (Dorn) hineinragt. So wird eine ordentliche Durchspülung des Kupplungselements (Dorns) sichergestellt. Aus fertigungstechnischen Gründen kann der rohrförmige Teil auch als zweites Bauteil gefertigt werden, das wiederum in die Spindelwelle eingeschrumpft wird.

Die Erfindung ist nicht auf die dreiteilige Ausgestaltung (Spindelwelle, Kupplungselement und Aufnahmeelement) beschränkt. Vielmehr ist es erfindungsgemäß auch möglich, die Spindelwelle und das Kupplungselement (Dorn) aus einem Stück zu fertigen. Dies ist insbesondere bei kleinen, dünnen Spindeln vorteilhaft, da diese lediglich mit einem geeigneten Ansatzzapfen versehen werden müssen. Es versteht sich, dass die Wärmeausdehnungskoeffizienten der Spindelwelle und des Aufnahmeelements ausreichend unterschiedlich sein müssen, um den Werkzeugwechsel beziehungsweise den Werkstückwechsel realisieren zu können. Alternativ ist es auch möglich, das Kupplungselement einstückig mit dem Aufnahmeelement auszubilden und dieses direkt in ein Sackloch (Ausnehmung) der Spindelwelle einzuschrumpfen. Auch hierbei sind entweder entsprechend unterschiedliche Ausdehnungskoeffizienten der Materialien erforderlich oder es erfolgt, wie erwähnt, eine lokale Erwärmung.

Im Folgenden wird die Erfindung anhand von Ausführungsbeispielen in Verbindung mit der Zeichnung beschrieben. Dabei zeigt:
- Figur 1: eine schematische Darstellung, teils im Schnitt, eines Ausführungsbeispiels der erfindungsgemäßen Spindelwelle mit Spanneinrichtung,
- Figur 2: eine vergrößerte Teilansicht des Ausführungsbeispiels der Figur 1,
- Figur 3: eine Variante des in Figur 2 gezeigten Ausführungsbeispiels,
- Figur 4: eine Darstellung analog Figuren 2 und 3 mit Kühlung und Heizung,
- Figur 5: ein weiteres Ausführungsbeispiel mit Innenkühlung der Spindelwelle,
- Figur 6: eine weitere Ausgestaltungsvariante, analog Figur 5, der Innenkühlung der Spindelwelle,
- Figur 7: ein weiteres Ausführungsbeispiel, analog den Figuren 5 und 6 mit Innenkühlung der Spindelwelle,
- Figur 8: eine weitere Ansicht einer weiteren Ausgestaltungsvariante,
- Figur 9: eine weitere Schnittansicht einer weiteren Ausgestaltungsvariante,
- Figur 10: eine Längs-Schnittansicht eines weiteren Ausführungsbeispiels der Erfindung, und
- Figur 11: eine Schnittansicht einer abgewandelten Ausgestaltungsform gemäß Figur 10.

Bei den nachfolgenden Ausführungsbeispielen werden gleiche Teile stets mit gleichen Bezugsziffern bezeichnet.

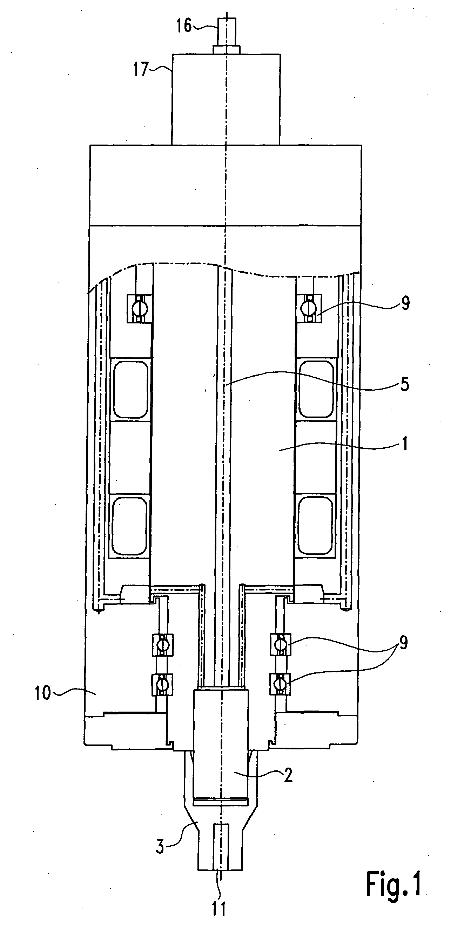

Die Figur 1 zeigt eine Spindelwelle 1, welche mittels Lagern 9 in einem Spindelgehäuse 10 gelagert ist. Die Ausgestaltung der Spindelwelle 1 ist grundsätzlich aus dem Stand der Technik bekannt, ebenso deren Lagerung, die Art der Lager sowie die Anordnung der Lager. Das Spindelgehäuse 10 ist nur schematisch dargestellt.

Wie sich insbesondere aus den Ausführungsbeispielen der Figuren 1 bis 4 ergibt, weist die Spindelwelle 1 an deren freiem Ende eine Ausnehmung (Sackloch) auf, in welche ein zylindrisches Kupplungselement (Dorn) eingesetzt ist. Dieses kann beispielsweise aus Hartmetall bestehen, so dass es eine geringere Wärmeausdehnung hat als die Spindelwelle 1. Somit kann bei einer Erwärmung der Spindelwelle 1 das Kupplungselement 2 eingebracht und somit eingeschrumpft werden.

Das Kupplungselement (Dorn) 2 steht über die vordere Fläche der Spindelwelle 1 vor und ermöglicht somit die lösbare Aufschrumpfung oder Befestigung eines Aufnahmeelements 3. Dieses ist an seinem rückwärtigen Ende ebenfalls mit einer Ausnehmung in Form eines Sacklochs versehen, welche passgenau zu dem Kupplungselement 2 gefertigt ist. Die weitere Ausgestaltung des Aufnahmeelements 3 entspricht dem Stand der Technik und ist insbesondere an unterschiedliche Werkzeuge und Werkzeuggrößen anpassbar. Somit weist das Aufnahmeelement 3 an seinem stirnseitigen freien Ende beispielsweise eine weitere Ausnehmung 11 auf (Sackloch), in welche ein Werkzeug einsetzbar ist. Es versteht sich, dass für unterschiedliche Werkzeuge und Werkzeuggrößen unterschiedlich ausgestaltete Aufnahmeelemente 3 verwendbar sind.

Das Material des Aufnahmeelements 3 ist so gewählt, dass sich bei dessen Erwärmung eine größere Wärmedehnung ergibt, als bei der Erwärmung des Kupplungselements 2. Somit ist es auf einfache Weise möglich, das Aufnahmeelement 3 binnen kürzester Zeit zu montieren bzw. zu demontieren. Hierdurch wird ein automatischer Werkzeugwechsel oder ein automatischer Werkstückwechsel in einem Bearbeitungszentrum ermöglicht.

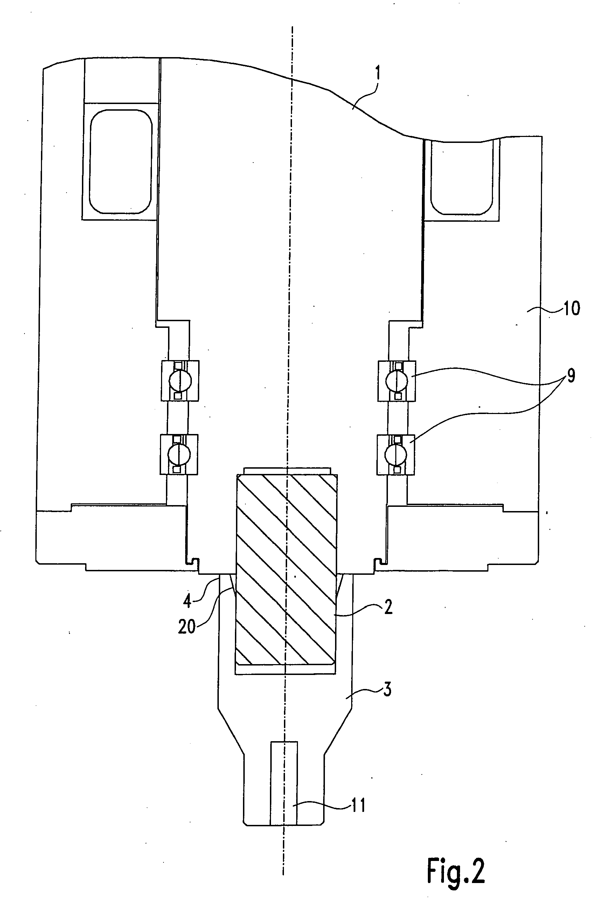

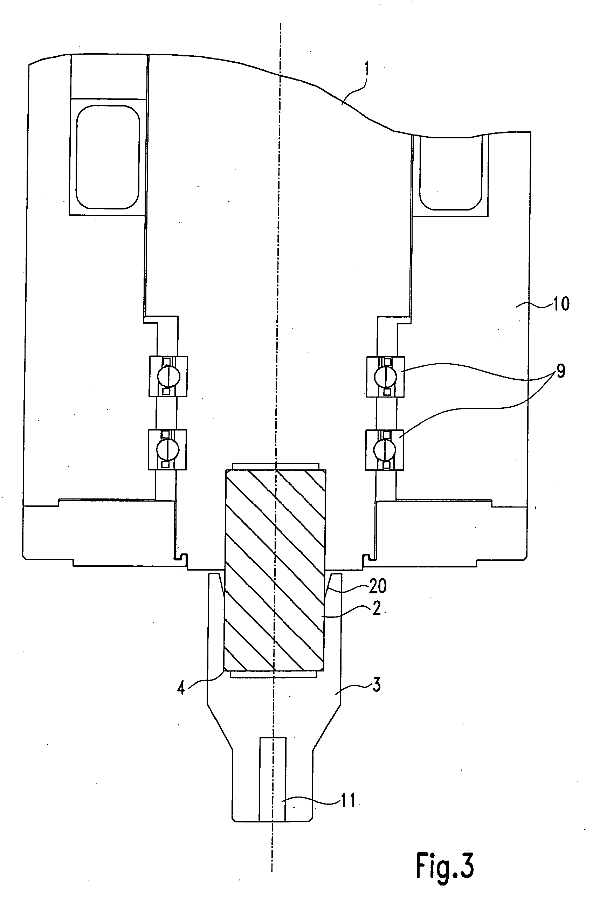

Das Ausführungsbeispiel der Figur 2 zeigt die Dimensionierung der Ausnehmung des Aufnahmeelements 3 derartig, dass sich ein Axialanschlag 4 dadurch ergibt, dass das Aufnahmeelement 3 gegen die Stirnfläche der Spindelwelle 1 zur Anlage kommt. In einer alternativen Ausgestaltung zeigt die Figur 3 den Axialanschlag zwischen der Stirnfläche des Kupplungselements 2 und einem ringförmigen Ansatz in der Ausnehmung des Aufnahmeelements 3. Durch beide Ausgestaltungsvarianten ist es möglich, bei einer Automatisierung des Werkzeugwechsels oder Werkstückwechsels eine exakte Positionierung des Aufnahmeelements 3 an der Spindelwelle 1 bzw. dem Kupplungselements 2 zu gewährleisten.

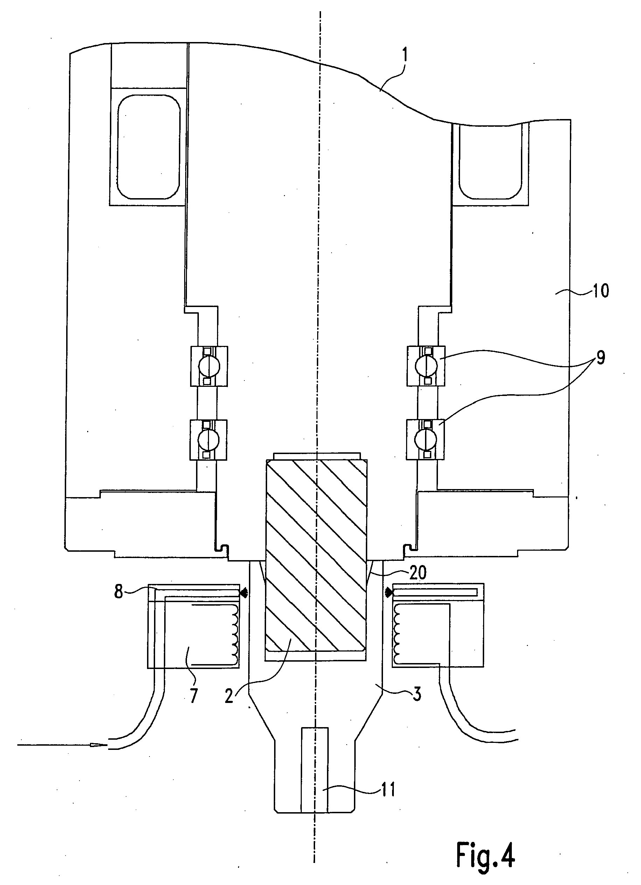

Die Figur 4 zeigt in schematischer Weise eine Möglichkeit zur Heizung bzw. Kühlung des Aufnahmeelements, um dieses von dem Kupplungselement 2 zu lösen bzw. auf dieses aufzuschrumpfen. Eine Heizung 7 ist beispielsweise in Form einer Induktionsheizung ausgebildet, während eine Kühlung 8 Kühlwasser bzw. Kühlmittel, welches längs des dargestellten Pfeils zugeführt wird, auf die Außenfläche des Aufnahmeelements 3 aufsprüht. Somit ist eine sehr schnelle und effektive Kühlung bzw. Heizung möglich. Die Heizung 7 sowie die Kühlung 8 können in Form mehrteiliger Backen ausgebildet sein, welche automatisch an das Aufnahmeelement 3 angeführt bzw. nach Beendigung des Werkzeugwechsels bzw. Werkstückwechsels wieder entfernt werden.

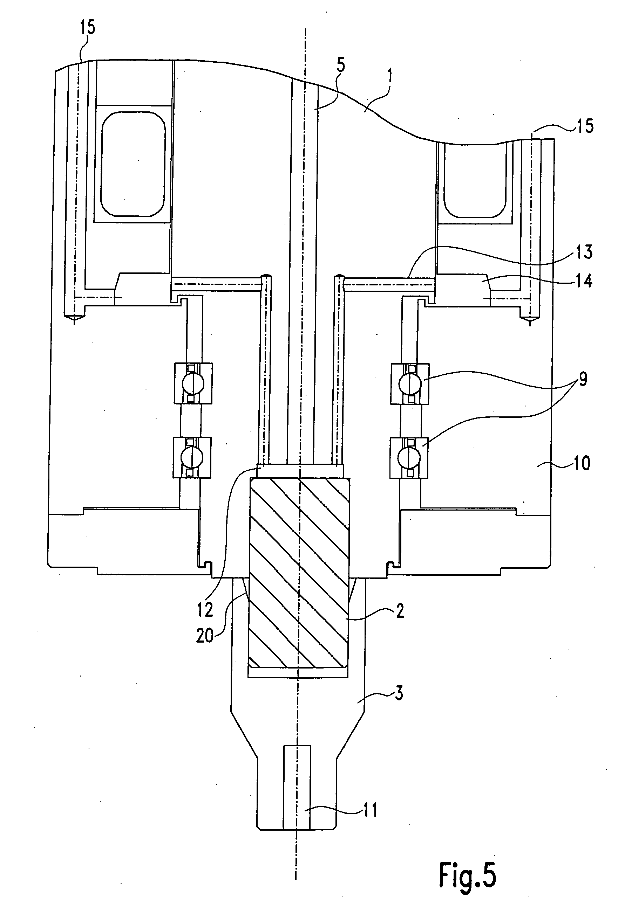

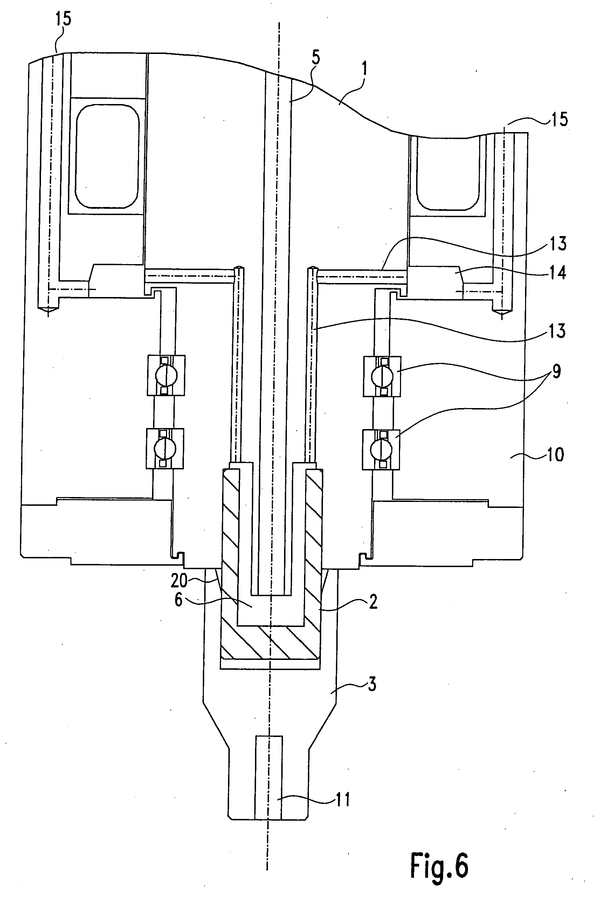

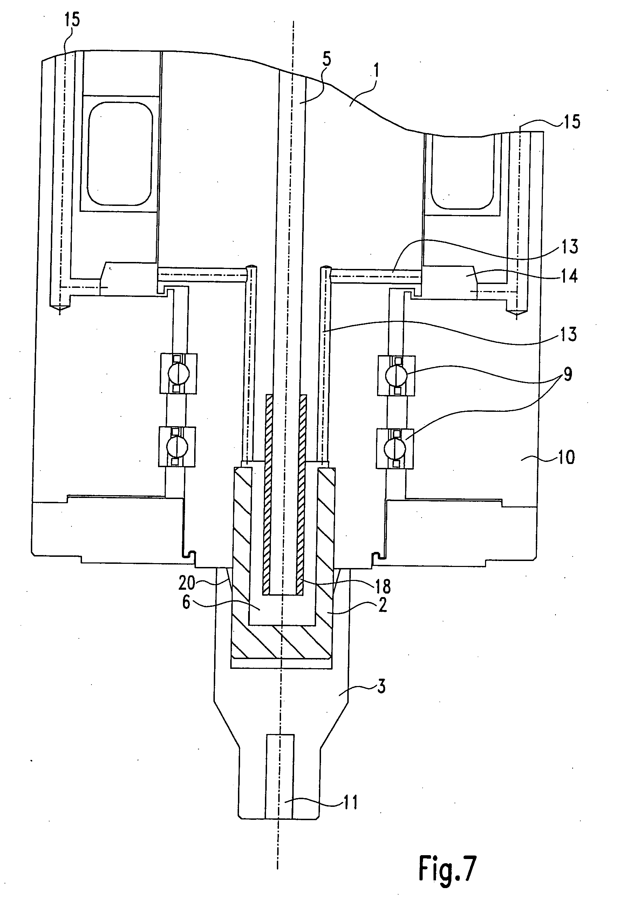

Die Ausführungsbeispiele der Figuren 5 bis 7 zeigen unterschiedliche Varianten einer Innenkühlung der Spindelwelle 1. Da diese erfindungsgemäß massiv ausgeführt sein kann und somit keine Elemente zum Spannen von Werkzeugen oder Werkstücken aufweist, ist es möglich, einen zentrischen Kühlmittelkanal 5 auszubilden, der in eine Kammer 12 (siehe Figur 5) mündet, die in der Spindelwelle 1 oberhalb des Kupplungselements 2 ausgebildet ist. Die Ausgestaltungsformen der Figuren 6 und 7 zeigen Varianten, bei welchen die Kammer 12 mit einer Ausnehmung 6 des Kupplungselements 2 kombiniert ist. Über mehrere Rückführkanäle 13 wird das Kühlmittel von der Kammer 12 aus der Spindelwelle 1 ausgeführt und in eine Ringkammer 14 des Spindelgehäuses 10 geleitet, von welcher aus es über einen Absaugkanal 15 abgeführt wird. Die Figuren 6 und 7 zeigen die jeweiligen Rückführkanäle 13 mit einem axialen und einem radialen Bereich. Der axiale Bereich dient dazu, das Kühlmittel parallel zur Drehachse der Spindelwelle 1 zurückzuleiten, so dass die radialen Bereiche der Rückführkanäle 13 oberhalb (gemäß den Darstellungen der Figuren 6 und 7) der Lager 9 münden. Durch die symmetrische Anordnung der Rückführkanäle wird die Gefahr einer Unwucht weiter verringert. Insbesondere bei den Ausführungsbeispielen der Figuren 6 und 7 ist somit eine weitere Möglichkeit geschaffen worden, das Kupplungselement 2 zu kühlen, um dessen Ausdehnung bei einem Werkzeugwechsel oder Werkstückwechsel beeinflussen zu können. Fig. 6 zeigt eine rohrförmige Verlängerung der Spindelwelle 1, während Fig. 7 ein separates Spindelwellenrohr 18 zeigt. Die Zuführung des Kühlmittels in den Kühlmittelkanal erfolgt über eine Kühlmittelleitung und eine Drehdurchführung 17.

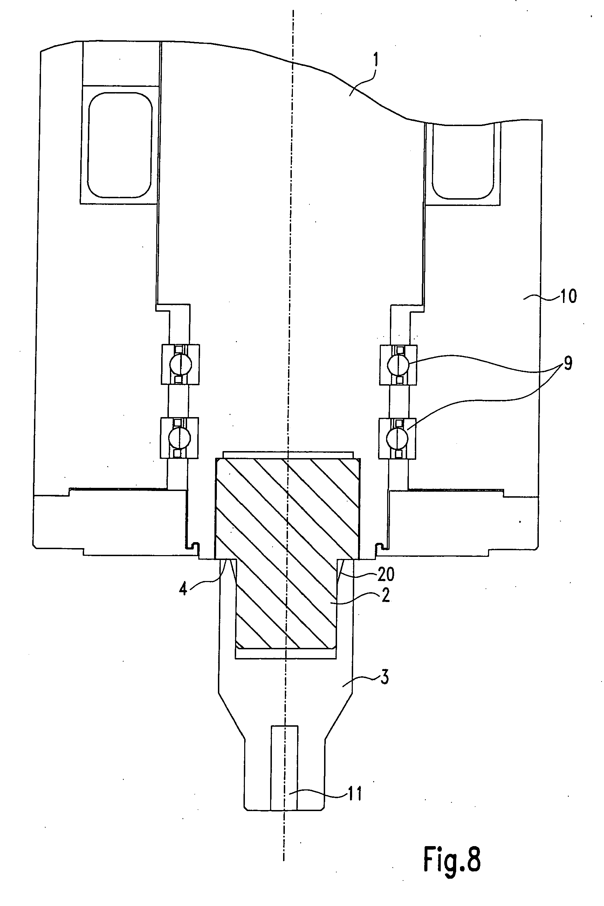

Die Figur 8 zeigt ein Ausführungsbeispiel des Kupplungselements 2, bei welchem dieses abgestuft ausgebildet ist, sodass das Sackloch (Ausnehmung) am freien Ende der Spindelwelle 1 einen größeren Durchmesser aufweist, als die Ausnehmung (Sackloch) des Aufnahmeelements. Eine derartige Ausgestaltung kann aus Stabilitätsgründen vorteilhaft sein. Sie kann sich auch anbieten, wenn das Aufnahmeelement selbst einen relativ geringen Durchmesser haben soll. Dabei versteht sich, dass sowohl bei dieser Ausgestaltungsvariante als auch bei den bereits beschriebenen Ausgestaltungsvarianten eine möglichst geringe Wandung des Aufnahmeelements im Bereich des Sackloches (Ausnehmung) in welche das Kupplungselement eingeführt wird, vorteilhaft ist, um nur geringe Materialvolumina kühlen beziehungsweise wärmen zu müssen.

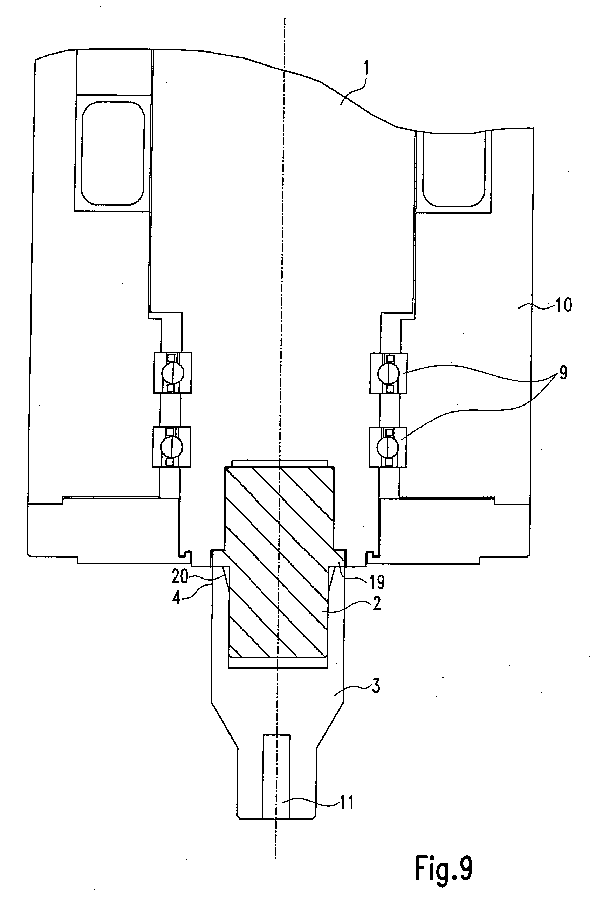

Die Figur 9 zeigt eine weitere Ausgestaltungsvariante, bei welcher das Kupplungselement (Dorn) 2 mit einer ringförmigen Anlagewulst 19 versehen ist, gegen welche sowohl das Aufnahmeelement 3 als auch die stirnseitige Fläche der Spindelwelle 1 anliegen. Hierdurch ergibt sich eine geringere Kontaktfläche und somit eine geringere Wärmeleitung von der Spindelwelle 1 auf das Aufnahmeelement 3.

Dabei ist es erfindungsgemäß besonders günstig, wenn das Kupplungselement 2 aus einem Material gefertigt ist, das eine sehr geringe Wärmeleitung aufweist. Ein keramisches Material ist hierfür besonders bevorzugt. Hierdurch kann die in der Spindelwelle 1 erzeugte Wärme nicht oder nur in geringem Maße über das Kupplungselement 2 auf das Aufnahmeelement 3 übertragen werden. Unerwünschte Wärmedehnungen und maßliche Veränderungen des Aufnahmeelements 3 sind somit ausgeschlossen.

Insgesamt ist es vorteilhaft, wenn die Kontaktfläche zwischen der Spindelwelle 1 und dem Aufnahmeelement 3 möglichst gering ist.

In einer Weiterbildung der Erfindung ist es auch möglich, die Kontaktfläche der Spindelwelle 1 oder des Aufnahmeelements 3 mit einer isolierenden Beschichtung, beispielsweise aus einem keramischen Material, besteht.

Eine weitere Möglichkeit, die Kontaktfläche zwischen dem Aufnahmeelement 3 und der Spindelwelle 1 bzw. dem Kupplungselement 2 zu reduzieren, besteht darin, den freien Rand oder den freien Endbereich des Aufnahmeelements 3 im Durchmesser zu verringern, beispielsweise einen Innenkonus 20 vorzusehen.

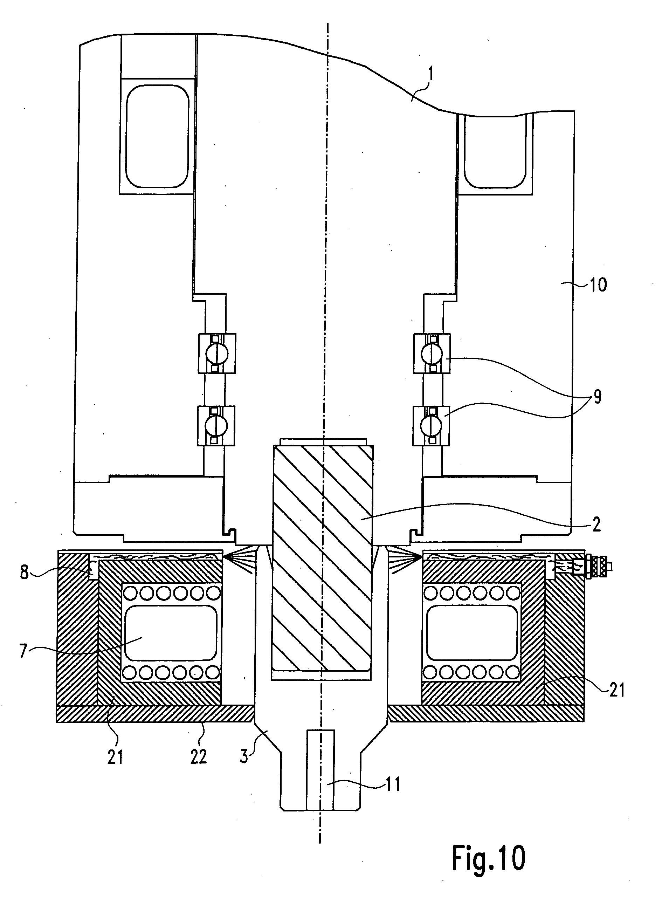

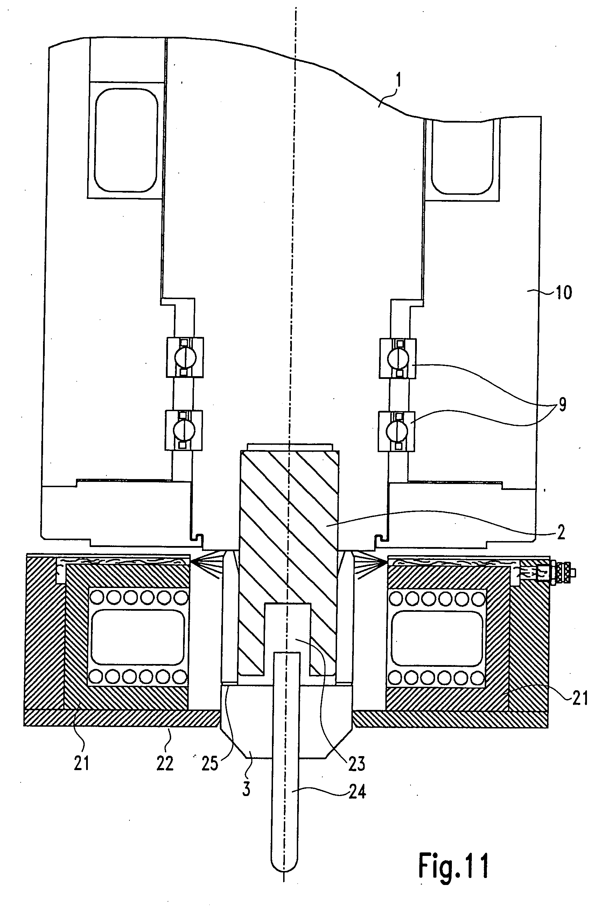

Die Ausführungsbeispiele der Figuren 10 und 11 zeigen eine Anordnung analog dem Ausführungsbeispiel der Figur 4, wobei jedoch eine zusätzliche Abschirmung 21 der Induktionsspulen der Heizung 7 vorgesehen ist. Dies kann mittels Ferritkernen oder Ferritplatten erfolgen, welche die Induktionsstrahlung der Spulen und damit die induktive Erwärmung nach außen abschirmen, so dass diese lediglich das Aufnahmeelement 3 erwärmt.

In einer Weiterbildung der Erfindung ist es auch möglich, das Aufnahmeelement 3 im Bereich des Schrumpfsitzes, d.h., in dem Bereich, in dem dieses auf das Kupplungselement 2 (Dorn) aufgesetzt ist, leicht konisch auszubilden. Bevorzugt wird dabei ein geringer Konuswinkel gewählt, so dass eine Selbsthemmung gewährleistet ist.

Die Ausführungsbeispiele der Figuren 10 und 11 zeigen weiterhin eine Zentrierung 22, welche in Form eines Zentrierrings ausgebildet sein kann. Hierdurch wird ein störungsfreier Wechsel des Aufnahmeelements 3 gewährleistet, zusätzlich ist eine zuverlässige Zentrierung gegeben. Das Aufnahmeelement 3 kann somit exakt zentriert innerhalb der Induktionsspule der Heizung 7 gehalten werden. Bei einer mehrteiligen, segmentartigen Ausgestaltung der Heizung 7 ist es auch möglich, die Zentrierung 22 anstelle als Ring auch als Ringsegmente auszubilden.

Da das Aufnahmeelement 3, bedingt durch die Dimensionierung der Heizung 7, eine gewisse Länge aufweisen muss, kann es günstig sein, in dem Kupplungselement 2 (Dorn) eine Ausnehmung 23 auszubilden, in welche das freie Ende eines Werkzeugs 24 vorstehen oder hineinragen kann. Da zum Bearbeiten eingesetzte Werkzeuge häufig Standardlängen aufweisen und da es wünschenswert ist, das Werkzeug 24 möglichst kurz einzuspannen, ist diese Ausgestaltungsvariante vorteilhaft, da dann das Werkzeug nicht gekürzt werden muss. Diese Ausgestaltungsform ist in Figur 11 dargestellt.

Weiterhin zeigt die Figur 11, dass das Aufnahmeelement 3 mit seitlichen Kanälen 25 versehen sein kann, welche dazu dienen, Kühlflüssigkeit, welche in das Aufnahmeelement 3 gelangt sein kann, abzuleiten und auf diese Weise zusätzliche Unwuchten zu vermeiden.

### Bezugszeichenliste

- 1: Spindelwelle
- 2: Kupplungselement (Dorn)
- 3: Aufnahmeelement
- 4: Axialanschlag
- 5: Kühlmittelkanal
- 6: Ausnehmung
- 7: Heizung
- 8: Kühlung
- 9: Lager
- 10: Spindelgehäuse
- 11: Ausnehmung
- 12: Kammer
- 13: Rückführkanal
- 14: Ringkammer
- 15: Absaugkanal
- 16: Kühlmittelleitung
- 17: Drehdurchführung
- 18: Spindelwellenrohr
- 19: Wulst
- 20: Innenkonus
- 21: Abschirmung
- 22: Zentrierung
- 23: Ausnehmung
- 24: Werkzeug
- 25: Kanal

## Patentansprüche

1. Werkzeugmaschine mit einer drehbaren Spindelwelle (1) zur Lagerung eines Werkzeugs oder Werkstücks, **dadurch gekennzeichnet, dass** das freie Ende der Spindelwelle (1) lösbar mit einem Kupplungselement (2) verbunden ist und dass das Kupplungselement (2) mittels eines Passsitzes mit einem Aufnahmeelement (3) lösbar verbunden ist und dass eine Einrichtung zum thermischen Lösen des Passsitzes vorgesehen ist.

2. Werkzeugmaschine nach Anspruch 1, **dadurch gekennzeichnet, dass** die Einrichtung zum thermischen Lösen des Passsitzes Mittel zur lokalen Erwärmung umfasst.

3. Werkzeugmaschine nach Anspruch 1 oder 2, **dadurch gekennzeichnet, dass** die Einrichtung zum thermischen Lösen des Passsitzes Mittel zum lokalen Kühlen umfasst.

4. Werkzeugmaschine nach einem der Ansprüche 1 bis 3, **dadurch gekennzeichnet, dass** die Spindelwelle (1), das Kupplungselement (2) und/oder das Aufnahmeelement (3) jeweils unterschiedliche Wärmeausdehnungskoeffizienten aufweisen.

5. Werkzeugmaschine nach einem der Ansprüche 1 bis 4, **dadurch gekennzeichnet, dass** das freie Ende der Spindelwelle (1) lösbar mittels eines zweiten thermisch lösbaren Passsitzes mit dem Kupplungselement (2) verbunden ist.

6. Werkzeugmaschine nach einem der Ansprüche 1 bis 5, **dadurch gekennzeichnet, dass** die Spindelwelle (1) mit einer Ausnehmung versehen ist, in welche das Kupplungselement (2) einsetzbar ist.

7. Werkzeugmaschine nach einem der Ansprüche 1 bis 6, **dadurch gekennzeichnet, dass** das Aufnahmeelement (3) mit einer Ausnehmung versehen ist, in welche das Kupplungselement (2) einsetzbar ist.

8. Werkzeugmaschine nach einem der Ansprüche 1 bis 7, **dadurch gekennzeichnet, dass** der Wärmeausdehnungskoeffizient des Kupplungselements (2) kleiner ist, als der Wärmeausdehnungskoeffizient des Aufnahmeelements (3).

9. Werkzeugmaschine nach einem der Ansprüche 1 bis 8, **dadurch gekennzeichnet, dass** der Wärmeausdehnungskoeffizient der Spindelwelle (1) kleiner ist, als der Wärmeausdehnungskoeffizient des Aufnahmeelements (3).

10. Werkzeugmaschine nach einem der Ansprüche 1 bis 9, **dadurch gekennzeichnet, dass** das Aufnahmeelement (3) und/oder das Kupplungselement (2) und/oder die Spindelwelle (1) mit einem Axialanschlag (4) versehen sind.

11. Werkzeugmaschine nach einem der Ansprüche 1 bis 10, **dadurch gekennzeichnet, dass** die Spindelwelle (1) mit einem axialen Kühlmittelkanal (5) versehen ist, welcher angrenzend an das Kupplungselement (2) mündet.

12. Werkzeugmaschine nach Anspruch 11, **dadurch gekennzeichnet, dass** der Kühlmittelkanal (5) in eine Ausnehmung (6) des Kupplungselements (2) mündet.

13. Werkzeugmaschine nach einem der Ansprüche 1 bis 12, **gekennzeichnet durch** eine induktive Heizung (7) des Aufnahmeelements (3).

14. Werkzeugmaschine nach Anspruch 13, **dadurch gekennzeichnet, dass** im Bereich der induktiven Heizung zur Abschirmung der Induktionsstrahlung Ferritelemente angeordnet sind.

15. Werkzeugmaschine nach einem der Ansprüche 1 bis 14, **gekennzeichnet durch** eine Kühlung (8) des Aufnahmeelements (3).

16. Werkzeugmaschine nach einem der Ansprüche 1 bis 15, **dadurch gekennzeichnet, dass** die Spindelwelle (1) und das Kupplungselement (2) einstückig ausgebildet sind.

17. Werkzeugmaschine nach einem der Ansprüche 1 bis 15, **dadurch gekennzeichnet, dass** das Aufnahmeelement (3) und das Kupplungselement (2) einstückig ausgebildet sind.

18. Werkzeugmaschine nach einem der Ansprüche 1 bis 15, **dadurch gekennzeichnet, dass** das Kupplungselement (2) aus einem Material mit geringer Wärmeleitung gefertigt ist.

19. Werkzeugmaschine nach Anspruch 18, **dadurch gekennzeichnet, dass** als Material mit geringer Wärmeleitung ein keramisches Material verwendet ist.

20. Werkzeugmaschine nach einem der Ansprüche 1 bis 19, **dadurch gekennzeichnet, dass** Kontaktflächen zwischen der Spindelwelle (1), dem Kupplungselement (2) und/oder dem Aufnahmeelement (3) mit einer wärmeisolierenden Beschichtung versehen sind.

21. Werkzeugmaschine nach einem der Ansprüche 1 bis 20, **dadurch gekennzeichnet, dass** eine zusätzliche Zentrierung (22) am freistehenden Endbereich des Aufnahmeelements (3) angeordnet ist.

22. Werkzeugmaschine nach einem der Ansprüche 1 bis 21, **gekennzeichnet durch** eine Abschirmung (21) der Heizung (7).

23. Werkzeugmaschine nach einem der Ansprüche 1 bis 22, **dadurch gekennzeichnet, dass** das Aufnahmeelement (3) mit Mitteln (25) zum Abführen von Kühlflüssigkeit versehen ist.
